# EUROPÄISCHE PATENTSCHRIFT

(11) **EP 3 621 782 B1**
(45) Veröffentlichungstag und Bekanntmachung des Hinweises auf die Patenterteilung: **30.12.2020**
(21) Anmeldenummer: 19749224.2
(22) Anmeldetag: 17.07.2019
(51) Int. Cl.: B29C 49/42, B29C 49/58, B29C 49/12, B29L 31/00, F16K 41/10, B67C 3/00, B29C 49/46

(54) **FORM- UND FÜLLVENTIL**
MOULDING AND FILLING VALVE
SOUPAPE DE FORMAGE ET DE REMPLISSAGE

(30) Priorität: 27.07.2018 DE 102018118237
(43) Veröffentlichungstag der Anmeldung: 18.03.2020
(73) Patentinhaber: KHS Corpoplast GmbH, 22145 Hamburg (DE)
(72) Erfinder: BAUMGARTE, Rolf, 22926 Ahrensburg (DE); LINKE, Michael, 22159 Hamburg (DE); LITZENBERG, Michael, 21039 Börnsen (DE)
(74) Vertreter: Meissner Bolte Partnerschaft mbB
(86) Internationale Anmeldenummer: PCT/EP2019/069248
(87) Internationale Veröffentlichungsnummer: WO 2020/020724

(56) Entgegenhaltungen:
- EP-A1- 2 654 976
- DE-A1- 19 611 664
- DE-A1-102014 017 871
- DE-U1-202005 014 423
- US-A1- 2016 361 859

## Beschreibung

Die Erfindung bezieht sich auf ein Form- und Füllventil nach dem Oberbegriff des Anspruches 1.

Form- und Füllventile kommen in Vorrichtungen zum Formen und Befüllen von Behältern zum Einsatz. In der Regel sind sie Bestandteil einer sogenannten Form- und Füllstation, von denen mehrere z.B. auf einem Arbeitsrad angeordnet seien können, um möglichst hohe Bearbeitungsgeschwindigkeiten zu erreichen.

Im Gegensatz zu normalen Füllventilen, mit denen bereits fertige Behälter gefüllt werden, wird mit Form- und Füllventilen gleichzeitig aus einem Vorformling (Preform) ein Behälter geformt und der sich bildende Behälter gefüllt. Erreicht wird dies durch Einleiten eines flüssigen Füllgutes mit hohem Fülldruck in einen thermisch konditionierten Vorformling. Der Vorformling ist in der Regel in einer Form angeordnet und wird durch das Füllgut in die durch die Form vorgegebene Behälterkontur expandiert. Übliche Fülldrücke in Form-und Füllstationen liegen zwischen 10 und 40 bar.

Der grundsätzliche Aufbau einer Maschine zum Füllen und Formen von Behältern aus Vorformlingen ist aus dem Stand der Technik hinlänglich bekannt. Zur Vermeidung von Wiederholungen wird auf DE 10201007541 A1 und dort insbesondere auf die Absätze [0028] bis [0065] verwiesen.

Ein gattungsgemäßes Form- und Füllventil ist aus der US 2016/0361859 A1 bekannt. Das hieraus bekannte Ventil weist einen Innenraum auf, der über einen seitlich angeordneten Einlass mit einer Quelle für das unter Druck stehende flüssige Füllgut kommuniziert. Am unteren Ende des Ventils ist ein Auslass vorgesehen, über den das Füllgut in einen darunter abgedichtet am Auslass angeordneten Preform gefüllt werden kann. Der Auslass ist zwischen den Form- und Füllvorgängen, also wenn kein Preform unter dem Auslass angeordnet ist, durch einen Dichtkörper verschlossen. Dieser Dichtkörper kann mittels eines in Längsrichtung durch das Ventil verlaufenden rohrförmigen Stößels angehoben werden, um den Auslass frei zu geben, und abgesenkt werden, um den Auslass zu verschließen. In dem rohrförmigen Stößel ist weiterhin eine in Längsrichtung (vertikal) verschiebbare Reckstange angeordnet, die während eines Form- und Füllvorganges in den Preform eingeführt werden kann und diesen in Längsrichtung streckt. Mit Hilfe der Reckstange wird die Hydroformung des Preforms zu einem Behälter unterstützt.

Ein Problem besteht darin, dass der Innenraum von Form- und Füllventilen eine Reihe von schwer zugänglichen Bereichen aufweist, z.B. Ecken, Vorsprünge, Befestigungsspalten zwischen zwei aneinander angeordneten Komponenten etc., die schwierig zu reinigen sind. Um ein mikrobiell einwandfreies Abfüllen von Füllgut zu gewährleisten, müssen diese Bereiche aber vor Inbetriebnahme von allen Flüssigkeitsresten gereinigt werden, was einen relativ großen Aufwand darstellt und ein in der Getränkeindustrie angestrebtes "CIP"-Verfahren (Cleaning in place) erschwert bzw. unmöglich macht.

Bei dem gattungsgemäßen Form- und Füllventil ist daher im Innenraum eine flexible ringförmige Membran vorgesehen, die innenseitig abgedichtet an dem Stößel und außenseitig abgedichtet an Wandbereichen des Innenraums befestigt ist. Diese Membran soll verhindern, dass das seitwärts in den Innenraum unter Druck einströmende Füllgut in obere Bereiche des Ventils gelangt. Die Membran muss dabei flexibel sein, da sie die Auf- und Abbewegung des Ventilstößels kompensieren muss. Ein Problem mit flexiblen Membranen ist jedoch, dass sie nur bedingt druckbelastbar sind. Bei dem gattungsgemäßen Ventil ist daher vorgesehen, dass die flexible Membran in allen Betriebspositionen des Ventilstößels durch Bereiche der Innenwand abgestützt wird. Wenn der Stößel bewegt wird, dann rollt sich die Membran praktisch in eine andere Abstützposition an der Innenwand. So wird sichergestellt, dass die Membran gegenüber der einströmenden Flüssigkeit abgestützt ist.

Problematisch an dem gattungsgemäßen Form- und Füllventil ist allerdings, dass die Hub- und Senkbewegungen des Ventilstößels, die Membranfläche und ihre Anordnung in dem Innenraum exakt abgestimmt werden müssen, damit die Membran die Abrollbewegung in die jeweils gewünschte abgestützte Position einnehmen kann.

Aufgabe der Erfindung ist es, ein verbessertes Form- und Füllventil bereitzustellen.

Gelöst wird die Aufgabe mit einem Form- und Füllventil, das die kennzeichnenden Merkmale des Anspruches 1 aufweist.

Ähnlich wie im Stand der Technik weist das erfindungsgemäße Form- und Füllventil einen in seinem Innenraum zwischen dem Ventilstößel und dem Innenwandbereich angeordneten flexiblen Membranring, d.h. eine ringförmige Membran auf.

Erfindungsgemäß ist vorgesehen, dass die Membran damit einen unteren Teil des Innenraumes begrenzt, durch den das unter Druck (10 - 40 Bar) stehende Füllgut in den Preform geleitet wird. Weiterhin begrenzt der Membranring einen oberen Teil des Innenraums, der vollständig mit einer Stützflüssigkeit gefüllt ist. Die Stützflüssigkeit stellt sicher, dass der Membranring vollflächig druckausgeglichen abgestützt ist, also nicht durch das unter Fülldruck stehende, im unteren Teil des Innenraumes befindliche Füllgut belastet wird.

Ein gattungsfremdes Ventil mit einem Membranring, der durch eine Stützflüssigkeit abgestützt ist, ist aus der DE 196 11 664 A1 bekannt. Dieses Ventil soll insbesondere im Chemie, Biochemie und Petrochemiebereich eingesetzt werden, also auf Gebieten fernab vom dem Anwendungsgebiet des erfindungsgemäßen Ventils, wo es unter anderem auf schnelle Schaltzeiten ankommt. Außerdem weist das erfindungsgemäße Ventil eine längsverschiebbare, den Membranring durchsetzende Reckstange auf, und ist damit konstruktiv deutlich aufwändiger als das bekannte Ventil.

Bei dem erfindungsgemäßen Ventil ist vorgesehen, dass das Volumen der eingefüllten Stützflüssigkeit konstant ist. Mit anderen Worten, die Stützflüssigkeit wird vor Inbetriebnahme des Form- und Füllventils eingefüllt und dann im Betrieb unverändert gelassen.

Es versteht sich weiterhin, dass der Membranring wie im Stand der Technik innenseitig gegenüber dem Ventilstößel und außenseitig gegenüber den Innenwandbereichen abgedichtet ist. Auch bei dieser erfindungsgemäßen Lösung ist die Membran ohne weiteres in der Lage, die Längsbewegungen des Ventilstößels mitzumachen.

In der Regel wird der Membranring im abgesenkten Zustand des Stößels eine vorgeformte leicht konkave Form aufweisen. Wird der Stößel angehoben, so wird die Raumveränderung im Bereich der Stützflüssigkeit dadurch kompensiert, dass sich die Membran in eine konvexe Form verformt.

Wie oben ausgeführt ist ein wesentlicher Aspekt der Erfindung, dass das Volumen der Stützflüssigkeit nach initialem Einfüllen konstant bleibt. Dies schließt natürlich nicht aus, dass im Falle von Stützflüssigkeitsverlusten eine entsprechende Nachfüllung erfolgt, die das ursprünglich gewünschte Volumen wieder herstellt. Abgesehen davon ist eine Anpassung des Volumens an eventuelle unterschiedliche Form- und Füllbedingungen, insbesondere veränderte Fülldrücke, nicht erforderlich.

Erfindungsgemäß ist vorgesehen, dass der obere Teil des Innenraumes vollständig mit einer inkompressiblen Stützflüssigkeit gefüllt ist. Der Begriff vollständig soll beinhalten, dass der Membranring wie oben ausgeführt in einer weitgehend druckausgeglichenen Situation in allen Betriebspositionen des Form- und Füllventils ist. Es muss also sichergestellt sein, dass die Membran vollständig durch die Stützflüssigkeit abgestützt wird.

Bei der Stützflüssigkeit kann es sich um beliebige inkompressible Flüssigkeiten handeln. Vorzugsweise ist vorgesehen, dass es sich um eine physiologisch unbedenkliche Flüssigkeit handelt.

Eine weitere Ausgestaltung der Erfindung betrifft die Messung und Einstellung des Fülldruckes. Üblicherweise wird der Fülldruck an der Füllgutquelle vorgegeben und im in das Ventil einströmenden Füllgut überprüft. Die Messung im Füllgut ist allerdings relativ aufwändig. Die erfindungsgemäße Ausgestaltung sieht daher vor, dass in dem mit Stützflüssigkeit gefüllten oberen Teil des Innenraums ein Drucksensor vorgesehen ist. Der durch das Füllgut im unteren Teil des Innenraums auf die Membran ausgeübte Druck, der dem Fülldruck entspricht, wirkt über die Stützflüssigkeit auf den Drucksensor, und kann dann von diesem gemessen werden. Auf diese Weise lässt sich in besonders einfacher Weise der Fülldruck ermitteln und dann ggf. justieren.

Vorteilhafterweise ist der Drucksensor an einem Wandbereich des oberen Teils des Innenraums vorgesehen.

Unabhängig von der oben erwähnten Tatsache, dass die Membran durch die Stützflüssigkeit weitgehend druckausgeglichen gehalten wird, kann es im Laufe des Betriebes dennoch zu Beschädigungen kommen, die relativ rasch erkannt werden müssen. Bevorzugt ist daher vorgesehen, dass die Membran im Inneren ein Hohlraumsystem einschließt, das mit einer geeigneten Leckageanzeigeeinrichtung, z.B. einem Schauglas oder einem Sensor verbunden ist. Eine solche Membran kann z. B. als Doppelmembran aus z.B. zwei aufeinanderliegenden Membranringen ausgeführt sein, die beabstandete Bereiche aufweisen. Zur Beabstandung der Membranringe können Abstandshalter vorgesehen sein. Wird die Membran beschädigt, so dringt entweder die abzufüllende Flüssigkeit von unten oder die Stützflüssigkeit von oben in den Hohlraum ein und läuft von dort zu dem Sensor bzw. einer sonstigen Leckanzeigeeinrichtung. Durch entsprechende Färbung der Stützflüssigkeit kann man weiterhin erreichen, dass die Position der Beschädigung der Membran relativ rasch erkannt werden kann.

Eine Membran mit solchen Merkmalen und Eigenschaften ist grundsätzlich aus der DE 196 11 664 A1 bekannt wenn auch auf einem anderen Anwendungsgebiet. Um Wiederholungen zu vermeiden wird auf diese Schrift verwiesen.

Die Membran kann aus den üblichen Materialien bestehen, die für Membranen verwendet werden können. Erforderlich ist, dass das Material die notwendige Flexibilität besitzt, flüssigkeitsdicht ist und eine ausreichende Belastbarkeit für den vorgesehenen Einsatz besitzt. Beispielhaft seien hier genannt Polytetrafluorethylen (PTFE), virginales PTFE, Acrylnitril-Butadien-Kautschuk (NBR), Verbundwerkstoffe wie Polyetheretherketon-PTFE (PEEK-PTFE) und gewebeverstärkte Dichtungswerkstoffe sowie sonstige Dichtungs- und Gummiwerkstoffe.

Im Folgenden soll die Erfindung an Hand einer Figur weiter erläutert werden.

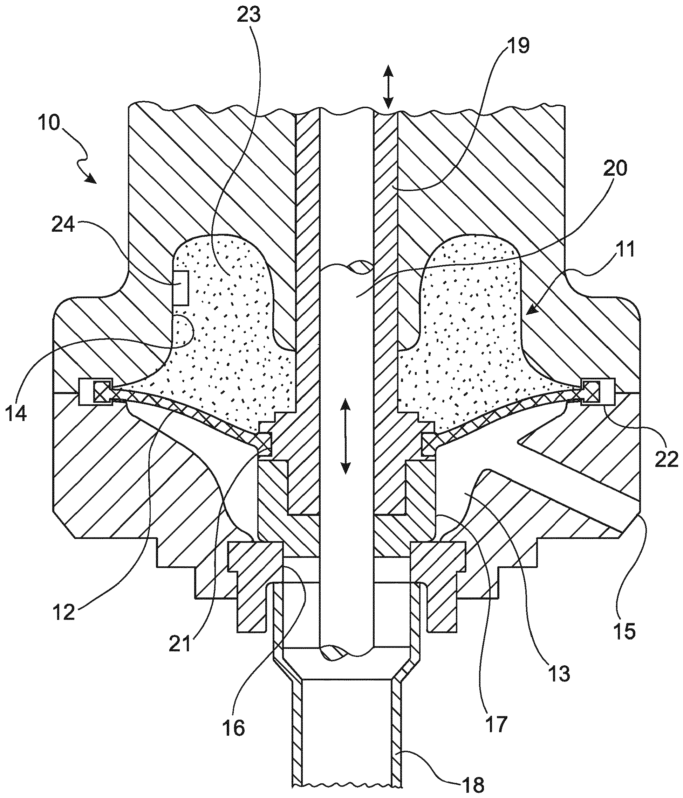

Die Figur zeigt den unteren Teil eines Form- und Füllventiles 10 in einer Schnittdarstellung. Man erkennt, dass das Ventil 10 einen Innenraum 11 aufweist, der durch einen flexiblen Membranring 12 in einen unteren Teil 13 und einen oberen Teil 14 unterteilt wird. Der untere Teil 13 des Innenraums 11 weist einen Zulauf 15 auf, durch den das abzufüllende Füllgut zugeführt werden kann. Der untere Teil 13 des Innenraums 11 weist weiterhin einen Auslass 16 auf, der im gezeigten Fall durch einen Dichtkörper 17 verschlossen ist. Der Auslass 16 kann in Flüssigkeitsverbindung mit einem Preform 18 gebracht werden.

Im Füllvorgang, d.h. wenn Flüssigkeit aus dem unteren Teil 13 des Innenraums 11 in den Preform 18 fließen soll, wird der Dichtkörper 17 mittels eines rohrförmigen Ventilstößels 19 angehoben, der in dem Form- und Füllventil 10 in Längsrichtung bewegbar aufgenommen ist.

Weiterhin zu erkennen ist eine in dem rohrförmigen Stößel 19 längsverschiebbar angeordnete Reckstange 20, die wie oben ausgeführt bei der Ausformung des Preforms 18 in Längsrichtung unterstützen soll. Dazu wird die Reckstange 20 während des Form-und Füllvorganges in den Preform 18 eingeführt und nach unten bewegt, bis die gewünschte Längsausdehnung erreicht ist.

Wie oben bereits ausgeführt, wird der Innenraum 11 des Form- und Füllventiles 10 durch einen Membranring 12 in einen oberen Teil 12 und einem unteren Teil 13 unterteilt. Aufgabe des Membranringes 12 ist zu verhindern, dass in den unteren Teil 13 des Innenraums 11 des Form- und Füllventiles 10 einströmendes Füllgut in weitere Bereiche des Ventils gelangt und diese kontaminiert. Dazu ist der Membranring 12 innenseitig am Ventilstößel 19 mit einem verdickten Randbereich in einer umlaufenden Ausnehmung 21 befestigt. Aussenseitig ist der Membranring 12 wiederum in einer umlaufenden Ausnehmung 22 im Ventil befestigt. Es versteht sich, dass die Befestigung des Membranringes sowohl innenseitig als auch außenseitig abgedichtet ist.

Wie bereits mehrfach ausgeführt, erfolgt die Formung und Befüllung des Preforms 18 mit einem unter einem Fülldruck zwischen 10 und 40 Bar stehenden Füllgut. Um zu verhindern, dass der im unteren Teil 13 des Innenraums 11 herrschende Druck den Membranring 12 beschädigt, ist weithin vorgesehen, dass der obere Teil 12 mit einer Stützflüssigkeit 23 gefüllt ist. Es handelt sich bei der Stützflüssigkeit 23 um eine inkompressible Flüssigkeit, die vorzugsweise physiologisch unbedenklich ist. Der obere Teil 12 des Innenraums 11 ist vollständig mit der Stützflüssigkeit 23 gefüllt, sodass der Membranring 12 in allen Betriebssituationen durch die Stützflüssigkeit abgestützt wird. Im gezeigten Fall ist der Auslass 16 durch den Dichtkörper 17 verschlossen, d.h. der Ventilstößel 19 ist in einer abgesenkten Position und der Membranring 12 hat eine leicht konvexe Form. Wird jetzt der Auslass geöffnet und in diesem Zusammenhang der Stößel 19 nach oben bewegt, so kommt es zu einer Neuverteilung der Stützflüssigkeit 23 in dem oberen Teil 13 des Innenraums 11 mit der Folge, dass sich die Membran leicht konkav nach unten ausbeult. Es kann im Rahmen der Erfindung vorgesehen sein, dass der Membranring mit einer leicht konvexen Form vorgeformt ist.

Im oberen Teil 14 des Innenraums 11 ist weiterhin ein Drucksensor 24 vorgesehen, mit dem der auf die Membran 12 im unteren Teil 13 des Innenraums 11 durch das Füllgut ausgeübte Druck gemessen kann. Dieser Druck entspricht dem Fülldruck, mit dem das Füllgut in den unteren Teil 13 des Innenraums einströmt bzw. in den Preform 18 eingeleitet wird. Der Druck auf die Membran 12 Druck wird über die Stützflüssigkeit direkt auf den Sensor 24 weitergeleitet und ermöglicht so eine besonders einfache Messung des Fülldrucks.

Wie oben bereits erwähnt, kann im Rahmen der Erfindung ein Membranring vorgesehen werden, der in der Lage ist, eine Leckage anzuzeigen. Da ein solcher Membranring hinlänglich aus dem Stand der Technik bekannt ist, wird hier auf eine Darstellung und Diskussion verzichtet.

## Patentansprüche

1. Form- und Füllventil für die gleichzeitige Ausformung eines zuvor thermisch konditionierten Preforms in einen Behälter und die Befüllung des sich bildenden Behälters durch Einleiten eines unter Druck stehenden Füllgutes, mit einem Innenraum, der einen Einlass in Flüssigkeitsverbindung mit einer Quelle für die unter Druck stehende Füllgut und einen in Flüssigkeitsverbindung mit dem Preform bringbaren Auslass aufweist, dem ein Dichtkörper zugeordnet ist, der mittels eines in Längsrichtung durch das Form- und Füllventil verlaufenden und bewegbaren rohrförmigen Stößels zwischen einer Position, in der er den Auslass verschließt und einer Position, in der er den Auslass freigibt, bewegt werden kann, wobei in dem Stößel eine in Längsrichtung bewegbare Reckstange angeordnet ist, die während des Form-und Füllvorgangs in den Preform eingeführt werden kann und dessen Formung in Längsrichtung unterstützt, und wobei in dem Innenraum ein innenseitig den Stößel abgedichtet umgebender flexibler Membranring vorgesehen ist, der außenseitig abgedichtet mit Wandbereichen des Innenraums verbunden ist und der einen unteren Teil des Innenraums, durch den das Füllgut in den Preform fließt, gegenüber den restlichen Ventilbereichen begrenzt, **dadurch gekennzeichnet, dass** der Membranring (12) mit einem oberen Teil (14) des Innenraums (11) einen Stützhohlraum einschließt, der dauerhaft vollständig mit einer inkompressiblen Stützflüssigkeit (23) gefüllt ist.

2. Form- und Füllventil nach Anspruch 1, **dadurch gekennzeichnet, dass** die Stützflüssigkeit (23) eine physiologisch unbedenkliche Flüssigkeit ist.

3. Form- und Füllventil nach Anspruch 1 oder 2, **dadurch gekennzeichnet, dass** der Membranring (12) aus einem der folgenden Materialien besteht: Polytetrafluorethylen (PTFE), virginales PTFE, Acrylnitril-Butadien-Kautschuk (NBR), Verbundwerkstoffe wie Polyetheretherketon-PTFE (PEEK-PTFE) und gewebeverstärkte Dichtungswerkstoffe sowie sonstige Dichtungs- und Gummiwerkstoffe.

4. Form- und Füllventil nach einem der Ansprüche 1-3, **dadurch gekennzeichnet, dass** im oberen Teil (14) des Innenraums (11) ein Drucksensor (24) vorgesehen ist.

5. Form- und Füllventil nach Anspruch 4, **dadurch gekennzeichnet, dass** der Drucksensor (24) an einem Wandbereich des oberen Teils (14) des Innenraums (11) angeordnet ist.

6. Form- und Füllventil nach einem der Ansprüche 1-5, **dadurch gekennzeichnet, dass** der Membranring einen inneren Hohlraum aufweist, der über Kanäle mit einer Leckageanzeigeeinrichtung verbunden ist, wobei der Membranring insbesondere als Doppelmembran ausgeführt ist, insbesondere als zwei aufeinanderliegende Membranringe mit zueinander beabstandeten Bereichen, wobei zur Ausbildung der Beabstandung zwischen den aufeinanderliegenden Membranringen Abstandshalter angeordnet sind.

7. Form- und Füllventil nach Anspruch 6, **dadurch gekennzeichnet, dass** die Leckageanzeigeeinrichtung ein Schauglas oder ein Sensor ist.

8. Form- und Füllventil nach Anspruch 7, **dadurch gekennzeichnet, dass** die Leckageanzeigeeinrichtung ein Schauglas ist und die Stützflüssigkeit eine von dem abzufüllenden Füllgut abweichende Einfärbung aufweist.

## Claims

1. A moulding and filling valve for the simultaneous moulding of a previously thermally conditioned preform into a container and the filling of the container being formed by introduction of a pressurised filling material, comprising an interior space, which has an inlet in fluid communication with a source for the pressurised filling material, and an outlet, which can be brought into fluid communication with the preform and to which a sealing element is assigned, which can be moved between a position in which it closes the outlet and a position in which it releases the outlet, by means of a tubular plunger, which runs and can be moved in the longitudinal direction through the moulding and filling valve, wherein a stretching rod that can be moved in the longitudinal direction and that can be introduced into the preform during the moulding and filling process and supports the moulding thereof, is arranged in the plunger, and wherein a flexible diaphragm ring, which surrounds the plunger in a sealed manner in the interior space and which is connected to wall regions of the interior space so as to be sealed externally and which delimits a lower part of the interior space, through which the filling material flows into the preform, relative to the remaining valve regions, is provided in the interior space, **characterised in that** with an upper part (14) of the interior space (11), the diaphragm ring (12) encloses a supporting hollow space, which is permanently completely filled with an incompressible supporting fluid (23).

2. The moulding and filling valve according to Claim 1, **characterised in that** the supporting fluid (23) is a physiologically harmless fluid.

3. The moulding and filling valve according to Claim 1 or 2, **characterised in that** the diaphragm ring (12) is made of any one of the following materials: polytetrafluorethylene (PTFE), virginal PTFE, acrylonitrile butadiene rubber (NBR), composite materials, such as polyether ether ketone PTFE (PEEK PTFE), and fabric-reinforced sealing materials, as well as other sealing and rubber materials.

4. The moulding and filling valve according to any one of Claims 1-3, **characterised in that** a pressure sensor (24) is provided in the upper part (14) of the interior space (11).

5. The moulding and filling valve according to Claim 4, **characterised in that** the pressure sensor (24) is arranged at a wall region of the upper part (14) of the interior space.

6. The moulding and filling valve according to any one of Claims 1-5, **characterised in that** the diaphragm ring has an inner hollow space, which is connected to a leakage display via channels, wherein the diaphragm ring is embodied in particular as double diaphragm, in particular as two diaphragm rings located on top of one another, comprising regions spaced apart from one another, wherein spacers are arranged between the diaphragm rings, which are located on top of one another, in order to form the spacing.

7. The moulding and filling valve according to Claim 6, **characterised in that** the leakage display is an inspection glass or a sensor.

8. The moulding and filling valve according to Claim 7, **characterised in that** the leakage display is an inspection glass, and the support fluid has a colouring that deviates from the filling material to be filled.

## Revendications

1. Soupape de formage et de remplissage pour la transformation d'une préforme préalablement thermiquement conditionnée en récipient et le remplissage simultané du récipient en cours de formation par introduction d'un produit de remplissage sous pression, avec un espace intérieur présentant une entrée en communication fluide avec une source de produit de remplissage sous pression et une sortie pouvant être mise en communication fluide avec la préforme, un corps d'étanchéité déplaçable - au moyen d'un poussoir tubulaire mobile s'étendant longitudinalement à travers le soupape de formage et de remplissage - entre une position qui obture la sortie et une position qui libère la sortie étant affecté à la soupape de formage et de remplissage, une barre d'étirage déplaçable longitudinalement étant agencée dans le poussoir, ladite barre pouvant être introduite dans la préforme pendant le processus de formage et de remplissage et contribuer à son formage longitudinal, une membrane annulaire flexible dont le bord intérieur entoure de façon étanche le poussoir étant prévue dans l'espace intérieur, le bord externe de ladite membrane étant relié de façon étanche aux parois de l'espace intérieur et ladite membrane délimitant une partie inférieure de l'espace intérieur par laquelle le produit de remplissage pénètre dans la préforme par rapport aux autres parties de la soupape, **caractérisée en ce que** la membrane annulaire (12) cerne avec la partie supérieure (14) de l'espace intérieur (11) une cavité de soutien, laquelle est en permanence entièrement remplie d'un liquide de soutien (23) incompressible.

2. Soupape de formage et de remplissage selon la revendication 1, **caractérisée en ce que** le liquide de soutien (23) est un liquide ne présentant pas de risques physiologiques.

3. Soupape de formage et de remplissage selon la revendication 1 ou 2, **caractérisée en ce que** la membrane annulaire (12) est constituée de l'un des matériaux suivants : polytétrafluoréthylène (PTFE), PTFE vierge, caoutchouc d'acrylonitrile-butadiène (NBR), matériaux composites comme le polyétheréthercétone-PTFE (PEEK-PTFE) et les matériaux d'étanchéification renforcés de tissu, ainsi que d'autres matériaux d'étanchéification et matériaux à base de caoutchouc.

4. Soupape de formage et de remplissage selon l'une des revendications 1 à 3, **caractérisée en ce qu'**un capteur de pression (24) est prévu dans la partie supérieure (14) de l'espace intérieur (11).

5. Soupape de formage et de remplissage selon la revendication 4, **caractérisée en ce que** le capteur de pression (24) est agencé au niveau d'une paroi de la partie supérieure (14) de l'espace intérieur (11).

6. Soupape de formage et de remplissage selon l'une des revendications 1 à 5, **caractérisée en ce que** la membrane annulaire présente une cavité intérieure reliée par des canaux à un dispositif indicateur de fuite, la membrane annulaire étant notamment réalisée sous forme de membrane double, notamment sous forme de deux membranes annulaires superposées avec des zones présentant un espacement, cet espacement étant obtenu au moyen d'écarteurs agencés entre les membranes superposées.

7. Soupape de formage et de remplissage selon la revendication 6, **caractérisée en ce que** le dispositif indicateur de fuite est un verre de regard ou un détecteur.

8. Soupape de formage et de remplissage selon la revendication 7, **caractérisée en ce que** le dispositif indicateur de fuite est un verre de regard et le liquide de soutien présente une coloration différente de celle du produit de remplissage.
